# EUROPÄISCHE PATENTSCHRIFT

(11) **EP 2 212 041 B1**
(45) Veröffentlichungstag und Bekanntmachung des Hinweises auf die Patenterteilung: **06.11.2013**
(21) Anmeldenummer: 08802383.3
(22) Anmeldetag: 19.09.2008
(51) Int. Cl.: B23B 27/16, B23B 29/04, B23B 13/00

(54) **WERKZEUGSYSTEM, INSBESONDERE ZUM NUTSTOSSEN**
TOOL SYSTEM, PARTICULARLY FOR SLOTTING
SYSTÈME D'OUTIL, NOTAMMENT DE RAINURAGE

(30) Priorität: 29.11.2007 DE 102007058825
(43) Veröffentlichungstag der Anmeldung: 04.08.2010
(73) Patentinhaber: Hartmetall-Werkzeugfabrik Paul Horn GmbH, 72072 Tübingen (DE)
(72) Erfinder: OETLLE, Matthias, 72585 Riederich (DE)
(74) Vertreter: Witte, Weller & Partner
(86) Internationale Anmeldenummer: PCT/EP2008/007870
(87) Internationale Veröffentlichungsnummer: WO 2009/068130

(56) Entgegenhaltungen:
- EP-A- 0 767 023
- WO-A-00/02692
- WO-A-2004/020130
- DE-A1- 4 102 529

## Beschreibung

Die vorliegende Erfindung betrifft ein Werkzeugsystem für eine spanende Bearbeitung mit einem eine Schneide aufweisenden Schneidwerkzeug und einem Halter zum Halten des Schneidwerkzeugs, wobei der Halter einen Einspannbereich, der sich entlang einer mittig in dem Einspannbereich verlaufenden ersten Längsachse erstreckt, und einen Haltebereich, der sich entlang einer mittig in dem Haltebereich verlaufenden zweiten Längsachse erstreckt und an dem das Schneidwerkzeug im Bereich des von dem Einspannbereich abgewandten Endes angebracht ist, aufweist.

Die Erfindung betrifft insbesondere ein Werkzeugsystem zum Nutstoßen.

Ein solches Werkzeugsystem ist in der internationalen Patentanmeldung WO 2008/014932 A1 beschrieben. Bei diesem Werkzeugsystem sind der Einspannbereich, mit dem das Werkzeugsystem in eine rotierende Arbeitsspindel oder in einen nicht rotierenden Maschinensupport eingespannt werden kann, und der Haltebereich, an dem das Schneidwerkzeug am freien Ende angebracht ist, koaxial zueinander angeordnet. Das Schneidwerkzeug ist so ausgestaltet und an dem freien Ende des Haltebereichs angeordnet, dass die Schneide über die Umfangsfläche des Haltebereichs vorsteht und einen Versatz zur Werkzeugmittelachse, also der bei diesem Werkzeugsystem zusammen fallenden ersten und zweiten Längsachsen, aufweist.

In Verbindung mit einer Bearbeitungsmaschine, die dem Werkzeugsystem eine Translationsbewegung vermittelt, werden derartige Werkzeugsysteme als Stoßwerkzeuge zum Stoßen von Nuten verwendet. Insbesondere wird ein solches Werkzeugsystem zum Nutstoßen von Innennuten innerhalb einer Bohrung eines Werkstückes verwendet. Wenn aber das bekannte Werkzeugsystem beispielsweise zur Herstellung von Nuten im Außenumfangsbereich eines Werkstückes verwendet werden soll, muss die Schneide in Richtung der quer zur Werkzeugmittelachse liegenden Maschinenachse über die im Allgemeinen parallel zur Werkzeugmittelachse verlaufenden Werkstückmittelachse gefahren werden, um mit der Schneide an den Startpunkt der gewünschten Außennut zu gelangen. Dieser Verfahrweg weit über die Werkstückmittelachse hinaus ist meist aber nur sehr begrenzt in der Praxis möglich und bei herkömmlichen Bearbeitungsverfahren, insbesondere auf einer Drehmaschine, auch nicht erforderlich, da regelmäßig nicht über die Werkstückmittelachse hinaus bearbeitet wird. Viele Bearbeitungsmaschinen ermöglichen deshalb einen so großen Verfahrweg auch überhaupt nicht.

Wenn das Werkzeugsystem jedoch aus verfahrens- oder vorrichtungstechnischen Gründen nicht um 180° um die Werkzeugmittelachse gedreht werden kann, um ein Herstellen einer Außennut ohne Verfahren der Schneide über die Werkstückmittelachse hinaus zu erreichen, bleibt letztlich jedoch keine andere Möglichkeit, als die Schneide über die Werkstückmittelachse hinaus zu verfahren.

Aus der EP 0 767 023 A1 ist ein Werkzeugsystem gemäß dem Oberbegriff des Anspruchs 1 bekannt.

Aus der DE 41 02 529 A1 ist eine Werkzeughalterung bekannt, in die sich ein Schneidwerkzeug mit einstellbarer Exzentrizität relativ zur Rotationsachse der Werkzeughalterung einsetzen lässt. Die Längsachse des Einspannbereichs und die Längsachse des Haltebereichs verlaufen dort beabstandet voneinander parallel.

Aus der WO 00/02692 A1 ist ein Werkzeugsystem mit mehreren an einem schaftartigen Halter befestigten Schneidplatten bekannt. Jede Schneidplatte ist in einer Aufnahme eines mit dem Werkzeughalter einstückigen, radial vorstehenden Abstützkörpers festgehalten, so dass die Schneiden über die Umfangsmitte des Haltebereichs vorstehen.

Vor diesem Hintergrund liegt der vorliegenden Erfindung die Aufgabe zugrunde, ein Werkzeugsystem der eingangs genannten Art derart weiterzubilden, dass die genannten Nachteile vermieden werden und mit dem die Bearbeitung eines Werkstücks sowohl am Außenumfang als auch im Innenbereich einer Bohrung, insbesondere das Stoßen von Innen- und Außennuten, bei möglichst geringem Verfahrweg möglich ist.

Diese Aufgabe wird bei dem eingangs genannten Werkzeugsystem dadurch gelöst, dass der Einspannbereich und der Haltebereich derart angeordnet sind, dass die erste Längsachse und die zweite Längsachse beabstandet voneinander parallel verlaufen oder sich unter einem spitzen Winkel schneiden, dass das Schneidwerkzeug an dem Haltebereich derart angebracht ist, dass die Schneide im Bereich eines Umfangsabschnitts des von dem Einspannbereich abgewandten Endes des Haltebereichs liegt, der den geringsten Abstand von der ersten Längsachse aufweist, dass der Haltebereich an seinem dem Einspannbereich abgewandten Ende an seiner Stirnseite und im Bereich des Umfangsabschnitts eine offene Vertiefung als Sitz für das Schneidwerkzeug aufweist und dass der Sitz und das Schneidwerkzeug so ausgestaltet sind, dass die Schneide über die Umfangsfläche des Haltebereichs vorsteht, und dass der Haltebereich an seiner Umfangsfläche eine Abstützung aufweist, die in Richtung auf die überstehende Schneide vorspringt, durch einen, bezogen auf die zweite Längsachse, aus der Umfangsfläche des Haltebereichs radial vorstehenden, mit diesem einstückigen Abstützkörper gebildet ist und eine Abstützfläche für eine zumindest teilweise Anlage des Schneidwerkzeugs und zur Aufnahme von auf das Schneidwerkzeug in axialer Richtung wirkenden Kräften aufweist.

Die der Erfindung zugrunde liegende Aufgabe wird auf diese Weise vollständig gelöst.

Bei dem erfindungsgemäßen Werkzeugsystem sind also Einspannbereich und Haltebereich nicht koaxial zueinander angeordnet, sondern in Richtung quer zu deren Längsachsen versetzt zueinander oder um einen spitzen Winkel zueinander geneigt. Ferner ist die Schneide am freien Ende des Haltebereichs möglichst nah zu der ersten Längsachse angeordnet. Der Erfindung liegt dabei der Gedanke zugrunde, dass eine Bearbeitung eines Werkstücks an dessen Außenumfang und in dessen Innenbereich, beispielsweise innerhalb einer Bohrung, dann bei geringerem Verfahrweg des Werkzeugsystems bzw. ohne Verfahren des Werkzeugsystems über die Werkstückmittelachse hinaus möglich ist, wenn der Einspannbereich und der Haltebereich so zueinander liegen und das Schneidwerkzeug so an dem Haltebereich angeordnet wird, dass die gewünschte Außenbearbeitung an dem Werkstück in einer Position des Werkzeugsystems erfolgen kann, bei dem die erste Längsachse in etwa der Werkstückmittelachse entspricht oder in deren Nähe liegt. Das Werkzeugsystem muss dann zur Bearbeitung im Innenbereich des Werkstücks nur in eine Richtung und nicht über die Werkstückmittelachse hinaus in die andere Richtung verfahren werden.

In der Regel werden solche Werkzeugsysteme, vorzugsweise mit einem aus Hartmetallwerkstoff bestehenden Schneidwerkzeug, für Bearbeitungsvorgänge benutzt, die mit hoher Genauigkeit durchzuführen sind. Um die Einhaltung entsprechend enger Toleranzen zu gewährleisten und eine hohe Güte der jeweils bearbeiteten Werkstückflächen zu erzielen, ist eine sichere und starre Befestigung des Schneidwerkzeugs am Haltebereich von ausschlaggebender Bedeutung. Erfindungsgemäß ist deshalb ferner vorgesehen, dass der Haltebereich an seinem dem Einspannbereich abgewandten Ende an seiner Stirnseite und im Bereich des Umfangsabschnitts eine offene Vertiefung als Sitz für das Schneidwerkzeug aufweist und dass der Sitz und das Schneidwerkzeug so ausgestaltet sind, dass die Schneide über die Umfangsfläche des Haltebereichs vorsteht.

Darüber hinaus ist weiterhin vorgesehen, dass der Haltebereich an seiner Umfangsfläche eine Abstützung aufweist, die in Richtung auf die überstehende Schneide vorspringt, durch einen, bezogen auf die zweite Längsachse, aus der Umfangsfläche des Haltebereichs radial vorstehenden, mit diesem einstückigen Abstützkörper gebildet ist und eine Abstützfläche für eine zumindest teilweise Anlage des Schneidwerkzeugs aufweist. Dadurch, dass für die Schneide ein Überstand über den Haltebereich vorgesehen ist, um die spanende Bearbeitung in außerhalb der Kontur des Halters gelegenen Bereichen zu ermöglichen, wirkt die Schneidkraft an einer relativ zum Haltebereich auskragenden Stelle des Werkzeugsystems. Schneidkräfte und erzeugte Momente werden daher in unmittelbarer Nachbarschaft der Angriffsstelle über die vorstehende Abstützung in den Haltebereich eingeleitet, was zu einer Verringerung der am Schneidwerkzeug, insbesondere dessen Festlegeteil, wirkenden Lastmomente beiträgt.

In einer bevorzugten Ausgestaltung des erfindungsgemäßen Werkzeugsystems ist vorgesehen, dass der Einspannbereich und der Haltebereich derart ausgestaltet und angeordnet sind und das Schneidwerkzeug derart an dem Haltebereich angeordnet ist, dass die Schneide im Bereich der ersten Längsachse liegt. Eine einfache Einstellung des Werkzeugs lässt sich insbesondere dann erreichen, wenn die Schneide genau auf der ersten Längsachse liegt. Je größer der zu bearbeitende Außendurchmesser des Werkstücks ist, um so weiter kann jedoch auch die Schneide von der bekannten Lage versetzt sein. Insbesondere kann die Schneide auch in derselben Richtung wie die zweite Längsachse von der ersten Längsachse beabstandet angeordnet sein.

In einer weiteren bevorzugten Ausgestaltung des erfindungsgemäßen Werkzeugsystems ist vorgesehen, dass der Einspannbereich und der Haltebereich zylinderförmig ausgestaltet sind. Dies stellt eine für das Nutstoßen besonders bevorzugte Ausgestaltung dar, die eine ausreichende Starre und Festigkeit aufweist.

Alternativ zu einer parallelen Anordnung des Haltebereichs und des Einspannbereichs ist grundsätzlich auch eine Anordnung denkbar, bei der der Haltebereich in Bezug auf den Einspannbereich geneigt angeordnet ist, so dass die erste und zweite Längsachse zueinander einen spitzen Winkel, von beispielsweise maximal 45°, insbesondere unter 15°, bilden, wie gemäß einer alternativen Weiterbildung vorgesehen ist. Ein solches Werkzeugsystem kann beispielsweise Anwendung finden zum Stoßen einer Nut an einem Werkstück mit einer kegelförmigen Außenumfangsfläche. In einer bevorzugten Ausgestaltung ist vorgesehen, dass die Abstützung von dem Schneidwerkzeug bis zum vom Schneidwerkzeug abgewandten Ende des Haltebereichs verläuft. Dadurch kann eine besonders gute und stabile Abstützung des Schneidwerkzeugs erreicht werden.

Alternativ ist in einer Ausgestaltung vorgesehen, dass die Abstützung von dem Schneidwerkzeug nur in dem dem Schneidwerkzeug zugewandten Endbereich des Haltebereichs angeordnet ist. Diese Ausgestaltung ist materialsparender, bewirkt aber dennoch eine ausreichende Abstützung des Schneidwerkzeugs.

Weitere Vorteile und Weiterbildungen ergeben sich aus der Beschreibung und den Zeichnungen.

Die Erfindung wird nachfolgend anhand der Zeichnungen näher erläutert. Es zeigen:
- Fig. 1: eine auseinander gezogene perspektivische Darstellung eines bekannten Werkzeugsystems,
- Fig. 2: eine perspektivische Darstellung des bekannten Werkzeugsystems und eines Werkstücks,
- Fig. 3: eine perspektivische Darstellung einer Ausgestaltung eines erfindungsgemäßen Werkzeugsystems und eines Werkstücks,
- Fig. 4: eine Seitenansicht des bekannten und des erfindungsgemäßen Werkzeugsystems im Vergleich neben einem Werkstück,
- Fig. 5: eine weitere perspektivische Darstellung des erfindungsgemäßen Werkzeugsystems,
- Fig. 6: eine Seitenansicht einer weiteren Ausgestaltung eines erfindungsgemäßen Werkzeugsystems,
- Fig. 7: eine Seitenansicht einer dritten Ausgestaltung eines erfindungsgemäßen Werkzeugsystems,
- Fig. 8: eine perspektivische Darstellung einer vierten Ausgestaltung eines erfindungsgemäßen Werkzeugsystems, und
- Fig. 9: eine Seitenansicht einer fünften Ausgestaltung eines erfindungsgemäßen Werkzeugsystems.

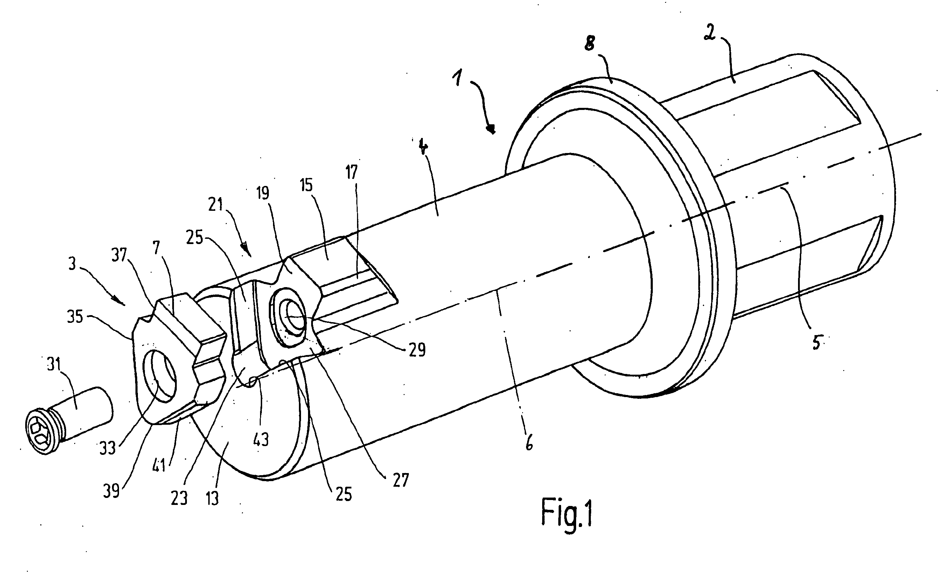

Fig. 1 zeigt eine perspektivische Schrägansicht eines bekannten Werkzeugsystems, wie es in der internationalen Patentanmeldung WO 2008/014932 A1 beschrieben ist. Dieses Werkzeugsystem ist als Stoßwerkzeug ausgebildet und umfasst im Wesentlichen einen Halter 1 und ein Schneidwerkzeug 3. Der Halter 1 wiederum umfasst einen Einspannbereich 2 zum Einspannen in eine Werkzeugmaschine, beispielsweise eine Spindel, einen Haltebereich 4 zum Halten des Schneidwerkzeugs 3 und einen dazwischen liegenden Flansch 8. Bei dem bekannten Werkzeugsystem sind der Einspannbereich 2 und der Haltebereich 4 koaxial zueinander angeordnet, so dass die Einspannlängsachse 5 (die erste Längsachse), die mittig in dem Einspannbereich 2 verläuft und entlang der sich der Einspannbereich 2 erstreckt, und die Haltelängsachse 6 (die zweite Längsachse), die mittig in den Einspannbereich 4 verläuft und entlang der sich der Einspannbereich 4 erstreckt, deckungsgleich sind. Zur Stoßbearbeitung an einem (nicht gezeigten) Werkstück wird der Halter 1 mit dem an ihm stirnseitig angebrachten Schneidwerkzeug 3 in Richtung der Achsen 5, 6 bewegt. Die quer zur Haltelängsachse 6 angeordnete Hauptschneide 7 des Schneidwerkzeugs 3 wirkt dabei mit einer Schneid- oder Arbeitskraft, die größtenteils entlang der Haltelängsachse 6 gerichtet ist, auf das Werkstück ein.

Zu erkennen ist die Abstützung des Schneidwerkzeugs 3 am Haltebereich 4, der, ebenso wie der Einspannbereich 2, die Form eines einen Rotationskörper bildenden Schaftes besitzt, wobei in der Nähe der Stirnfläche 13 des Haltebereichs 4 ein mit diesem einstückig ausgebildeter Abstützkörper 15 radial vorstehend ausgebildet ist. Der Abstützkörper 15 besitzt die Form eines zu seiner Ober- oder Außenseite hin leicht abgeschrägten Klotzes, der, abgesehen von seinen Abschrägungen 17, einen etwa quadratischen Querschnitt besitzt. An seiner der Stirnfläche 13 zugewandten Seite bildet der Abstützkörper 15 eine in einer Radialebene liegende ebene Abstützfläche 19. Diese befindet sich von der vorderen Stirnfläche 13 des Halters in einem axialen Abstand, welcher der axialen Erstreckung eines am Halter 1 befindlichen Sitzes entspricht, indem das Schneidwerkzeug 3 aufnehmbar und darin festlegbar ist.

Wie aus Fig. 1 ferner erkennbar ist, ist der Sitz 21 durch eine an der Stirnfläche 13 und am Umfang des Haltebereichs 4 offene Vertiefung gebildet. Diese weist, ausgehend vom Vertiefungsgrund 23, der in der Nähe der Haltelängsachse 5 gelegen ist, Sitzwände 25 auf, die sich, ausgehend vom Grund 23 und zueinander divergierend, zum Außenumfang des Haltebereichs 4 hin erstrecken. Der Aufnahmeraum des Sitzes 21 für das Schneidwerkzeug 3 hat daher einen V-förmigen Querschnitt.

Die rückwärtige Endfläche 27 des Sitzes 21 liegt in gemeinsamer Ebene mit der Abstützfläche 19 des Abstützkörpers 15, so dass die Abstützfläche 19 eine unmittelbare Fortsetzung der hinteren Endfläche 27 des Sitzes 21 bildet. Somit steht für das im Sitz 21 festgelegte Schneidwerkzeug 3 eine durchgehende, plane Kontaktfläche zur Verfügung, die sich über den Außenumfang des Haltebereichs 4 hinaus radial mit der Abstützfläche 19 des Abstützkörpers 15 fortsetzt.

Das Schneidwerkzeug 3 weist an seiner der vorderen Schneide 7 entgegengesetzten Rückseite eine plane Anlagefläche auf, die, wenn das Schneidwerkzeug 3 im Sitz aufgenommen ist, formschlüssig an der hinteren Endfläche 25 und der sie radial fortsetzenden Abstützfläche 19 anliegt. Wie aus Fig. 1 zu ersehen ist, befindet sich am Übergangsbereich zwischen Endfläche 27 und Abstützfläche 19 eine Gewindebohrung 29 für eine Spannschraube 31 in Form einer eine Durchgangsbohrung 33 im Schneidwerkzeug 3 durchgreifenden Senkkopfschraube, mittels deren das Schneidwerkzeug 3 im Sitz 21 festspannbar ist, wobei sich der Festlegeteil 35 des Schneidwerkzeuges 3 mit Seitenwänden 41 in seitlicher Anlage an den Sitzwänden 25 befindet und der der Schneide 7 benachbarte Schneidenteil 37 des Schneidwerkzeuges 3 an der Abstützfläche 19 des Abstützkörpers 15 anliegt.

Wie ebenfalls erkennbar ist, hat das Festlegeteil 35 des blockförmig gestalteten Schneidwerkzeugs 3 im Wesentlichen eine Keilform, die dem V-förmigen Aufnahmequerschnitt des Sitzes 21 angepasst ist, wobei die Keilform im unteren Scheitelbereich 39 abgerundet ist. Die sich vom Scheitelbereich 39 divergierend erstreckenden Seitenwände 41 des Festlegeteils 35 weisen von der ebenen Gestalt abweisende Flächenbereiche oder eine gewisse ballige Formgebung für eine optimale Anlage an den Sitzwänden 25 auf. Die Enden der Sitzwände 25 am Grund 23 der den Sitz 21 bildenden Vertiefung sind durch eine Ausnehmung 43 in Form einer Teilbohrung voneinander getrennt, so dass am Grund 23 ein Freiraum zwischen Halter 1 und Scheitelbereich 39 des im Sitz 21 aufgenommenen Schneidwerkzeuges erzeugt wird.

Weitere Details eines solchen Plattensitzes sind in dem Europäischen Patent EP 559 965 B1 beschrieben, auf die hiermit Bezug genommen wird.

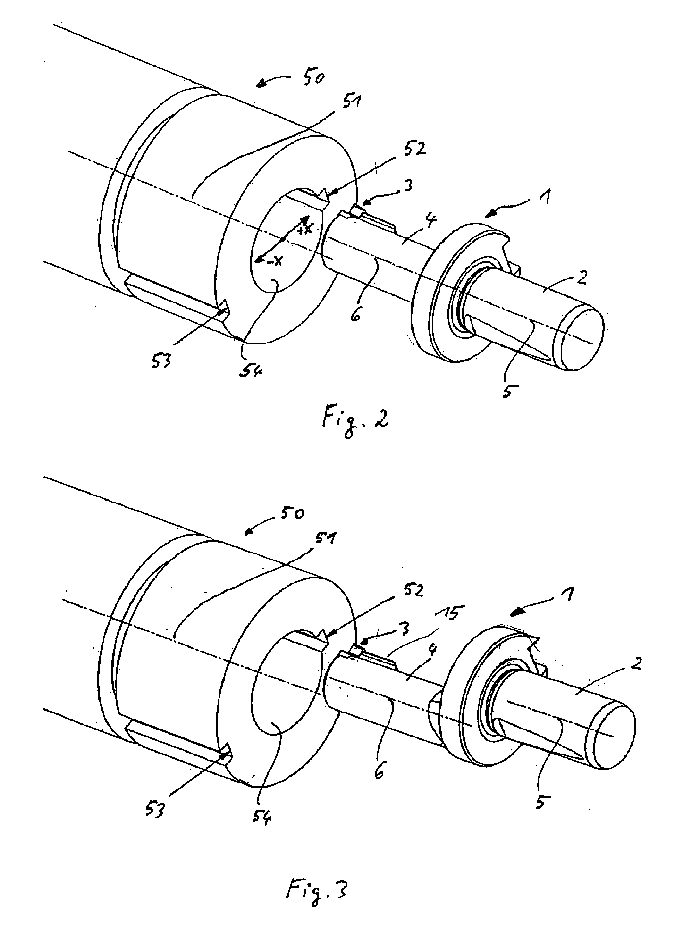

Fig. 2 zeigt das bekannte Werkzeugsystem nochmals aus anderer Perspektive zusammen mit einem Werkstück 50. Um an dem Werkstück 50 eine Innennut 52 zu stoßen, muss das Werkzeugsystem, da die Schneide 7 einen Versatz (Abstand) zur Haltelängsachse 6 (und damit auch zur Einspannlängsachse 5) in radialer Richtung aufweist, nur wenig oder, je nach Lage der gewünschten Innennut 52 bzw. je nach Durchmesser der Bohrung 54 innerhalb des Werkstücks 50, gar nicht in +X-Richtung ausgehend von der Werkstückmittelachse 51 verfahren werden. Zum Herstellen von Nuten 53 im Außenbereich des Werkstückes 50 muss das Schneidwerkzeug 3 allerdings über die Werkstückmittelachse 51 hinaus in -X-Richtung verfahren werden, um mit der Hauptschneide 7 an den Startpunkt der Nut 53 zu gelangen. Dieses Verfahren über die Werkstückmittelachse 50 hinaus ist allerdings häufig bei den in der Praxis eingesetzten Drehmaschinen nicht erforderlich bzw. gar nicht möglich, da in diesem Bereich über die Werkstückmittelachse hinaus, also im -X-Bereich, normalerweise nicht gearbeitet wird. Da es oft auch nicht möglich ist, das Werkzeugsystem komplett um 180° um die Haltelängsachse 6 bzw. Einspannlängsachse 5 zu drehen, um die Außennut 53 an der +X-Seite zu ermöglichen, bleibt keine andere Möglichkeit, als das Werkzeugsystem in den -X-Bereich zu verfahren.

Eine Ausgestaltung eines erfindungsgemäßen Werkzeugsystems zusammen mit dem Werkstück 50 ist in Fig. 3 gezeigt. Im Unterschied zu der in den Fig. 1 und 2 gezeigten Ausgestaltung des Werkzeugsystems sind bei dieser Ausgestaltung der Einspannbereich 2 und der Haltebereich 4 versetzt zueinander angeordnet, so dass also die Einspannlängsachse 5 und die Haltelängsachse 6 beabstandet voneinander und parallel zueinander verlaufen und der Einspannbereich 2 und der Haltebereich 4 somit nicht koaxial zueinander angeordnet sind. Alle weiteren Elemente des Werkzeugsystems können grundsätzlich in gleicher Weise ausgestaltet und angeordnet sein, wie im Zusammenhang mit der in den Fig. 1 und 2 gezeigten Ausgestaltung erläutert wurde.

Wie aus Fig. 3 erkennbar ist, ist das Schneidwerkzeug, insbesondere die Hauptschneide 7, so an einem Umfangsabschnitt des freien Endes des Haltebereichs 4 angeordnet, dass sie einen möglichst geringen Abstand zu der Einspannlängsachse 5 aufweist. Bei der gezeigten Ausgestaltung liegt beispielsweise die Hauptschneide 7 des Schneidwerkzeugs 3 genau auf der Haltelängsachse 5, wobei dies jedoch nicht zwingend ist. Je größer der zu bearbeitende Außendurchmesser des Werkstücks 50 ist, desto weiter kann auch die Hauptschneide 7 in -X-Richtung von der Einspannlängsachse 5 beabstandet werden, insbesondere indem Einspannbereich 2 und Haltebereich 4 noch mehr zueinander versetzt angeordnet werden.

Um nun die Außennut 53 zu stoßen, braucht das Werkzeugsystem nicht mehr so weit (oder gar nicht mehr) in -X-Richtung verfahren zu werden, wie bei dem bekannten in den Fig. 1 und 2 gezeigten Werkzeugsystem. Gleichzeitig ist aber auch das Stoßen von Innennuten 52 möglich, wozu nun das Werkzeugsystem in +X-Richtung verfahren werden muss. Das erfindungsgemäße Werkzeugsystem kann also mit einer größeren Zahl von (bekannten) Werkzeugmaschinen genutzt werden, ohne dass diese umgerüstet werden müssten.

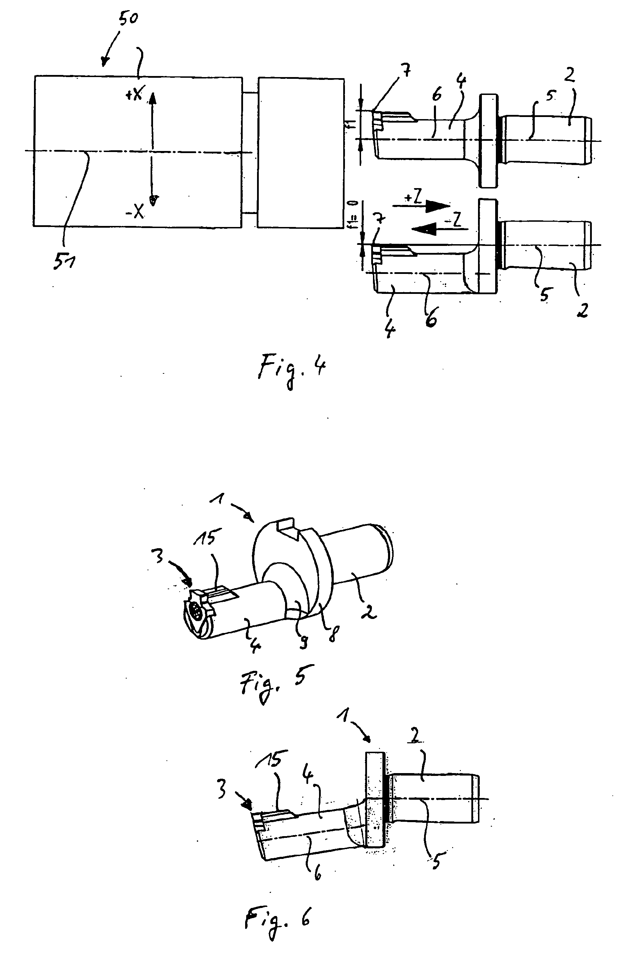

In Fig. 4 sind untereinander in Seitenansicht nochmals die Ausgestaltung des Werkzeugsystems gemäß Fig. 1 und 2 im Vergleich zu der erfindungsgemäßen Ausgestaltung gemäß Fig. 3 neben dem Werkstück 50 gezeigt. Wie gut erkennbar ist, ist bei der oberen (bekannten) Ausgestaltung die Schneide 7 von den zusammen fallenden Einspannlängsachse 5 und Haltelängsachse 6 um einen Versatz f1 beabstandet angeordnet. Bei der unteren erfindungsgemäßen Ausgestaltung dagegen liegt die Schneide 7 genau auf der Einspannlängsachse 5, so dass also der Versatz zu dieser Einspannlängsachse 5 gleich 0 ist.

Fig. 5 zeigt die erfindungsgemäße Ausgestaltung aus einer anderen Perspektive schräg von vorne. Aus dieser Perspektive ist insbesondere auch erkennbar, wie der Haltebereich 4 an dem Flansch 8 über eine Verdickung 9 angeflanscht ist.

Fig. 6 zeigt in Seitenansicht eine weitere Ausgestaltung eines erfindungsgemäßen Werkzeugsystems. Der Einspannbereich 2 und der Haltebereich 4 sind dort nicht so angeordnet, dass die Einspannlängsachse 5 und die Haltelängsachse 6 versetzt parallel zueinander verlaufen, sondern derart, dass sich die Einspannlängsachse 5 und die Haltelängsachse 6 unter einem spitzen Winkel schneiden. Dieser Winkel beträgt bevorzugt weniger als 45°, insbesondere weniger als 15°, hier beispielsweise nur wenige Grad. Ein derart ausgestaltetes Werkzeugsystem kann beispielsweise dazu genutzt werden, schräge Nuten in einem Werkstück oder Nuten in einem Werkstück mit - in Werkstücklängsachse gesehen - schräg verlaufenden Konturen einzubringen.

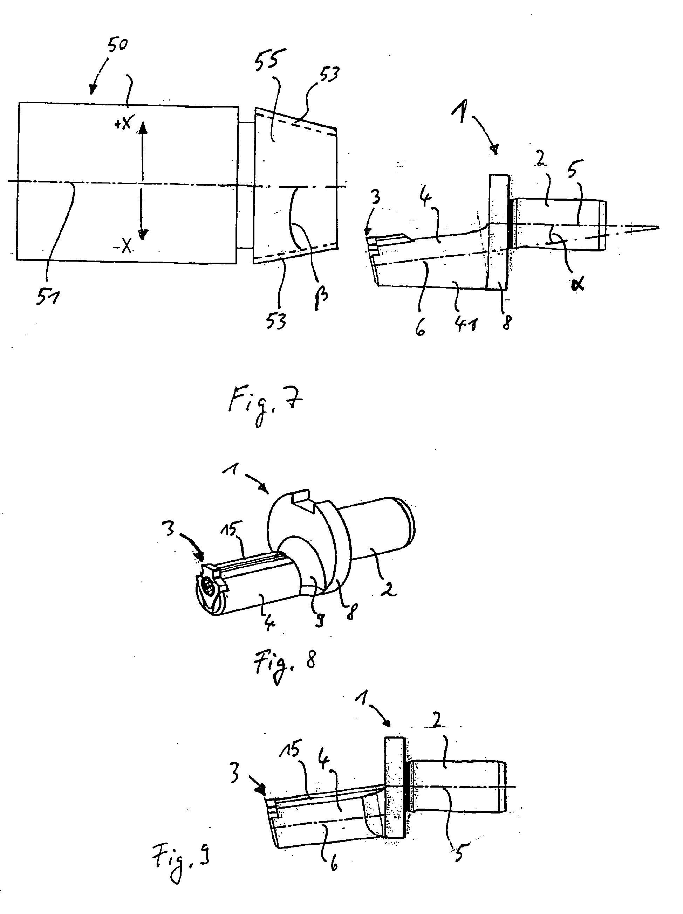

Fig. 7 zeigt in Seitenansicht eine dritten Ausgestaltung eines erfindungsgemäßen Werkzeugsystems. Auch bei dieser Ausgestaltung sind der Einspannbereich 2 und der Haltebereich 4 sind so angeordnet, dass sich die Einspannlängsachse 5 und die Haltelängsachse 6 unter einem spitzen Winkel schneiden ähnlich wie bei der in Fig. 6 gezeigten Ausgestaltung. Der Haltebereich 4 ist bei dieser Ausgestaltung in seinem unteren, nicht das Scheidwerkzeug 3 tragenden Bereich 41 verstärkt ausgeführt, so dass die der Haltebereich 4 nicht zylinderförmig ausgestaltet ist, sondern eine zum Flansch 8 hin zunehmende Balligkeit aufweist. Dadurch wird eine größere Stabilität und Bruchfestigkeit erreicht.

In Fig. 7 ist ferner ein für die Bearbeitung mit einer solchen Ausgestaltung des Werkzeugsystems vorgesehenes Werkstück 50 gezeigt, das in seinem vorderen, mit einer Außennut 53 zu versehenden Abschnitt 55 kegelförmig ausgestaltet ist, wobei sich der Durchmesser des Abschnitts 55 zum Werkzeugsystem hin verringert.

Bevorzugt ist das Werkzeugsystem 1 bei einer solchen Anwendung so ausgestaltet, dass der Winkel α, unter dem sich die Haltelängsachse 6 und die Einspannlängsachse 5 schneiden, dem Winkel β entspricht, unter dem die kegelige Außenfläche 56 des Abschnitts 55 zu der Werkstückmittelachse 55 geneigt ist. Dadurch wird erreicht, dass die Außennut 53 durch eine Linearbewegung des Werkzeugsystems 1 in Richtung der Einspannlängsachse 5 in das Werkstück 50 gestoßen werden kann und kein gleichzeitiges Verfahren des Werkzeugsystems 1 in einer Richtung quer zur Einspannlängsachse 5 erforderlich ist.

Um auch bei den in den Fig. 6 und 7 gezeigten Ausführungsformen einen optimalen Wirkwinkel zu erzielen, kann das Schneidwerkzeug bei diesen Ausführungsformen einen anderen Spanwinkel aufweisen als bei der in Fig. 5 gezeigten Ausführungsform.

Fig. 8 zeigt eine perspektivische Darstellung einer vierten Ausgestaltung eines erfindungsgemäßen Werkzeugsystems. Diese Ausgestaltung unterscheidet sich von der in Fig. 5 gezeigten Ausgestaltung dadurch, dass die Abstützung 15 von dem Schneidwerkzeug 3 bis zum vom Schneidwerkzeug 3 abgewandten Ende des Haltebereichs 4 verläuft, während bei der in Fig. 5 gezeigten Ausgestaltung die Abstützung 15 von dem Schneidwerkzeug 3 nur in dem dem Schneidwerkzeug zugewandten Endbereich des Haltebereichs 4 angeordnet ist. Dadurch wird eine größere Stabilität und Festigkeit der Abstützung 5 erreicht.

In gleicher Weise verläuft die Abstützung 15 bei der in Fig. 9 gezeigten Seitenansicht einer fünften Ausgestaltung eines erfindungsgemäßen Werkzeugsystems, anders als bei der in Fig. 6 gezeigten Ausgestaltung, über die gesamte Länge des Haltebereichs 3.

Es versteht sich, dass die Erfindung nicht auf die gezeigten Ausführungsformen beschränkt ist. Insbesondere können Einspannbereich, Haltebereich und Schneidwerkzeug anders ausgestaltet und/oder angeordnet sein, solange die erfindungsgemäße Wirkung erzielt wird. Die Erfindung ist auch nicht auf Werkzeugsysteme zum Nutstoßen beschränkt, sondern kann grundsätzlich auch bei anderen Werkzeugsystemen, beispielsweise zum Drehen oder Fräsen, eingesetzt werden, bei denen grundsätzlich dasselbe Problem auftreten kann, das erfindungsgemäß gelöst wurde. Das Schneidwerkzeug muss folglich auch nicht zwingend an der Stirnfläche des Haltebereichs und über dessen Außenumfang vorstehend angeordnet sein, sondern kann auch beispielsweise an oder in der Außenumfangsfläche angeordnet sein.

Es versteht sich, dass die vorstehend genannten und nachstehend noch erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen. Es sei ferner angemerkt, dass Begriffe wie "etwa" oder "im Wesentlichen" zum Ausdruck bringen sollen, dass Abweichungen von einer (mathematisch) exakten Wertangabe, die (bewusst oder unbewusst) vorgesehen sind (beispielsweise infolge von Fertigungstoleranzen) und die im Bereich von ± 10% liegen, als mit umfasst gelten sollen.

## Patentansprüche

1. Werkzeugsystem für eine spanende Bearbeitung mit einem eine Schneide (7) aufweisenden Schneidwerkzeug (3) und einem Halter (1) zum Halten des Schneidwerkzeugs (3), wobei der Halter (1) einen Einspannbereich (2), der sich entlang einer mittig in dem Einspannbereich (2) verlaufenden ersten Längsachse (5) erstreckt, und einen Haltebereich (4), der sich entlang einer mittig in dem Haltebereich (4) verlaufenden zweiten Längsachse (6) erstreckt und an dem das Schneidwerkzeug (3) im Bereich des von dem Einspannbereich (2) abgewandten Endes angebracht ist, aufweist, wobei der Haltebereich (4) an seinem dem Einspannbereich (2) abgewandten Ende an seiner Stirnseite und im Bereich des Umfangsabschnitts eine offene Vertiefung (21) als Sitz für das Schneidwerkzeug (3) aufweist,
**dadurch gekennzeichnet, dass** der Einspannbereich (2) und der Haltebereich (4) derart angeordnet sind, dass die erste Längsachse (5) und die zweite Längsachse (6) beabstandet voneinander parallel verlaufen oder sich unter einem spitzen Winkel schneiden, dass das Schneidwerkzeug (3) an dem Haltebereich (4) derart angebracht ist, dass die Schneide (7) im Bereich eines Umfangsabschnitts des von dem Einspannbereich (2) abgewandten Endes des Haltebereichs (4) liegt, der den geringsten Abstand von der ersten Längsachse (5) aufweist,
dass der Sitz (21) und das Schneidwerkzeug (3) so ausgestaltet sind, dass die Schneide (7) über die Umfangsfläche des Haltebereichs (4) vorsteht, und
dass der Haltebereich (4) an seiner Umfangsfläche eine Abstützung (15) aufweist, die in Richtung auf die überstehende Schneide (7) vorspringt, durch einen, bezogen auf die zweite Längsachse (6), aus der Umfangsfläche des Haltebereichs (4) radial vorstehenden, mit diesem einstückigen Abstützkörper gebildet ist und eine Abstützfläche (19) für eine zumindest teilweise Anlage des Schneidwerkzeugs (3) und zur Aufnahme von auf das Schneidwerkzeug (3) in axialer Richtung wirkenden Kräften aufweist.

2. Werkzeugsystem nach Anspruch 1, **dadurch gekennzeichnet, dass** der Einspannbereich (2) und der Haltebereich (4) derart ausgestaltet und angeordnet sind und das Schneidwerkzeug (3) derart an dem Haltebereich (4) angeordnet ist, dass die Schneide (7) im Bereich der ersten Längsachse (5), insbesondere genau auf der ersten Längsachse (5), liegt.

3. Werkzeugsystem nach einem der vorstehenden Ansprüche, **dadurch gekennzeichnet, dass** der Einspannbereich (2) und der Haltebereich (4) zylinderförmig ausgestaltet sind.

4. Werkzeugsystem nach einem der vorstehenden Ansprüche, **dadurch gekennzeichnet, dass** das Werkzeugsystem ein Nutstoßwerkzeugsystem ist.

5. Werkzeugsystem nach einem der vorstehenden Ansprüche, **dadurch gekennzeichnet, dass** der Einspannbereich (2) und der Haltebereich (4) derart angeordnet sind, dass die erste Längsachse (3) und die zweite Längsachse (6) sich unter einem Winkel von maximal 45°, insbesondere von maximal 15°, schneiden.

6. Werkzeugsystem nach einem der vorstehenden Ansprüche, **dadurch gekennzeichnet, dass** die Abstützung (15) von dem Schneidwerkzeug (3) bis zum vom Schneidwerkzeug (3) abgewandten Ende des Haltebereichs (4) verläuft.

7. Werkzeugsystem nach einem der vorstehenden Ansprüche, **dadurch gekennzeichnet, dass** die Abstützung (15) von dem Schneidwerkzeug (3) nur in dem dem Schneidwerkzeug zugewandten Endbereich des Haltebereichs (4) angeordnet ist.

## Claims

1. Tool system for machining including a cutting tool (3) having a cutting edge (7) and a holder (1) for holding the cutting tool (3), wherein the holder (1) has a fixing area (2), which extends along a first longitudinal axis (5) extending centrally in the fixing area (2), and a support area (4), which extends along a second longitudinal axis (6) extending centrally in the support area (4) and at which the cutting tool (3) is attached in the area of the end being turned away from the fixing area (2), wherein the support area (4) has, at its end being turned away from the fixing area (2) at its face side and in the area of the peripheral portion, an open cavity (21) for seating the cutting tool (3),
**characterized in that** the fixing area (2) and the support area (4) are arranged such that the first longitudinal axis (5) and the second longitudinal axis (6) extend parallel and at a distance to one another or intersect in a pointed angle, that the cutting tool (3) is attached to the support area (4) such that the cutting edge (7) is arranged in the area of a peripheral portion of the end of the support area (4) being turned away from the fixing area (2), which has the smallest distance to the first longitudinal axis (5),
that the seating (21) and the cutting tool (3) are formed such that the cutting edge (7) protrudes over the peripheral surface of the support area (4), and
that the support area (4) has a strut (15) at its peripheral surface, which overhangs in the direction of the protruding cutting edge (7), is formed by a, in relation to the second longitudinal axis (6), radially protruding out of the peripheral surface of the support area (4), and therewith integrally formed strut body, and has a strut surface (19) for at least a partial application of the cutting tool (3) and for the reception of forces acting on the cutting tool (3) in axial direction.

2. Tool system according to claim 1, **characterized in that** the fixing area (2) and the support area (4) are formed and arranged and the cutting tool (3) is arranged at the support area (4) such that the cutting edge (7) is arranged in the area of the first longitudinal axis (5), in particular exactly on the first longitudinal axis (5).

3. Tool system according to one of the preceding claims, **characterized in that** the fixing area (2) and the support area (4) are formed cylindrically.

4. Tool system according to one of the preceding claims, **characterized in that** the tool system is a groove-knocking tool system.

5. Tool system according to one of the preceding claims, **characterized in that** the fixing area (2) and the support area (4) are arranged such that the first longitudinal axis (3) and the second longitudinal axis (6) intersect at an angle of at most 45°, in particular of at most 15°.

6. Tool system according to one of the preceding claims, **characterized in that** the strut (15) of the cutting tool (3) extends to the end of the support area (4) being turned away from the cutting tool (3).

7. Tool system according to one of the preceding claims, **characterized in that** the strut (15) of the cutting tool (3) is arranged only in the end area of the support area (4) being turned to the cutting tool.

## Revendications

1. Système d'outil, pour un usinage par enlèvement de copeaux, comprenant un outil de coupe (3) présentant une lame de coupe (7) et un support (1) pour retenir l'outil de coupe (3), le support (1) présentant une région de serrage (2) qui s'étend le long d'un premier axe longitudinal (5) s'étendant centralement dans la région de serrage (2), et une région de retenue (4) qui s'étend le long d'un deuxième axe longitudinal (6) s'étendant centralement dans la région de retenue (4) et au niveau de laquelle l'outil de coupe (3) est monté dans la région de l'extrémité opposée à la région de serrage (2), la région de retenue (4) présentant, au niveau de son extrémité opposée à la région de serrage (2), sur son côté frontal et dans la région de la portion périphérique, un renfoncement ouvert (21) servant de siège pour l'outil de coupe (3),
**caractérisé en ce que** la région de serrage (2) et la région de retenue (4) sont disposées de telle sorte que le premier axe longitudinal (5) et le deuxième axe longitudinal (6) s'étendent parallèlement l'un à l'autre et à distance l'un de l'autre ou se coupent suivant un angle aigu, **en ce que** l'outil de coupe (3) est monté sur la région de retenue (4), de telle sorte que la lame de coupe (7) se situe dans la région d'une portion périphérique de l'extrémité de la région de retenue (4) opposée à la région de serrage (2) qui présente la plus faible distance au premier axe longitudinal (5),
**en ce que** le siège (21) et l'outil de coupe (3) sont configurés de telle sorte que la lame de coupe (7) fasse saillie au-delà de la surface périphérique de la région de retenue (4), et
**en ce que** la région de retenue (4) présente sur sa surface périphérique un appui (15) qui fait saillie dans la direction de la lame de coupe saillante (7), qui est formé par un corps d'appui saillant radialement par rapport au deuxième axe longitudinal (6) depuis la surface périphérique de la région de retenue (4), qui est réalisé d'une seule pièce avec celle-ci, et qui présente une surface d'appui (19) pour une application au moins partielle de l'outil de coupe (3) et pour recevoir des forces agissant sur l'outil de coupe (3) dans la direction axiale.

2. Système d'outil selon la revendication 1, **caractérisé en ce que** la région de serrage (2) et la région de retenue (4) sont configurées et disposées de telle sorte, et l'outil de coupe (3) est disposé sur la région de retenue (4) de telle sorte que la lame de coupe (7) se situe dans la région du premier axe longitudinal (5), en particulier exactement sur le premier axe longitudinal (5).

3. Système d'outil selon l'une quelconque des revendications précédentes, **caractérisé en ce que** la région de serrage (2) et la région de retenue (4) sont configurées sous forme cylindrique.

4. Système d'outil selon l'une quelconque des revendications précédentes, **caractérisé en ce que** le système d'outil est un système d'outil pour mortaisage.

5. Système d'outil selon l'une quelconque des revendications précédentes, **caractérisé en ce que** la région de serrage (2) et la région de retenue (4) sont disposées de telle sorte que le premier axe longitudinal (3) et le deuxième axe longitudinal (6) se coupent suivant un angle de 45° au maximum, en particulier de 15° au maximum.

6. Système d'outil selon l'une quelconque des revendications précédentes, **caractérisé en ce que** l'appui (15) s'étend depuis l'outil de coupe (3) jusqu'à l'extrémité de la région de retenue (4) opposée à l'outil de coupe (3).

7. Système d'outil selon l'une quelconque des revendications précédentes, **caractérisé en ce que** l'appui (15) est disposé depuis l'outil de coupe (3) seulement dans la région d'extrémité de la région de retenue (4) tournée vers l'outil de coupe.
